# EUROPEAN PATENT SPECIFICATION

(11) **EP 3 858 645 B1**
(45) Date of publication and mention of the grant of the patent: **16.10.2024**
(21) Application number: 20465503.9
(22) Date of filing: 29.01.2020
(51) Int. Cl.: B60C 23/04, B60C 29/00, B60C 29/02

(54) **TYRE PARAMETER MONITORING SYSTEM AND METHOD FOR MOUNTING A TYRE PARAMETER MONITORING SYSTEM ONTO A WHEEL RIM OF A VEHICLE**
REIFENPARAMETERÜBERWACHUNGSSYSTEM UND VERFAHREN ZUR MONTAGE EINES REIFENPARAMETERÜBERWACHUNGSSYSTEMS AUF EINER RADFELGE EINES FAHRZEUGS
SYSTÈME DE SURVEILLANCE DE PARAMÈTRE DE PNEU ET PROCÉDÉ DE MONTAGE D'UN SYSTÈME DE SURVEILLANCE DE PARAMÈTRE DE PNEU SUR UNE JANTE DE ROUE D'UN VÉHICULE

(43) Date of publication of application: 04.08.2021
(73) Proprietor: Continental Automotive Technologies GmbH, 30175 Hannover (DE)
(72) Inventor: Barbalata, Mihai, 81737 München (DE)
(74) Representative: Continental Corporation

(56) References cited:
- CN-U- 205 086 612
- DE-U1- 202014 103 121
- US-A1- 2008 276 995
- US-A1- 2011 000 293

## Description

The present invention relates to a system for measuring one or more parameters of a tyre fitted to a wheel rim of a vehicle, such as pressure of a tyre fitted to the wheel rim of a vehicle and to a method for mounting a tyre parameter monitoring system onto a wheel rim.

Tyre parameter monitoring systems typically include an inflation valve for introducing or removing air from the tyre and an electronic module which includes a sensor unit or measuring one of more parameters of the tyre. The inflation valve is positioned in a bore or hole in the wheel rim and the electronic module is arranged inside the tyre and is coupled with the inflation valve. Such a system may be used to inform the driver of any abnormal variation in the measured parameter, for example the tyre pressure.

One type of tyre parameter monitoring system or tyre pressure monitoring system (TPMS) is known as the snap-in type, in which the inflation valve positioned on the outside of the wheel rim extends through a bore in the wheel rim and is connected to an electronic unit positioned on the inside of the wheel rim by a snap-in connection. Snap-in valves include an elastically deformable stem. An example of such a snap-in system is disclosed in EP 2 818 506 A1.

Another type of tyre parameter monitoring system is known as the clamp-in type. For the clamp-in type it is generally possible to fasten the electronic module in various angular positions with respect to the wheel rim. This enables the system to be mounted on wheel rims of different designs. An example of such a clamp-in system is disclosed in US 7 059 178 B2.

CN 205086612, US 2011/000293 A1, US 2008/276995 A1 and DE 20 2014 103121 U1 each disclose a tyre parameter monitoring system.

It is desirable to simplify assembly of the tyre parameter monitoring system to the wheel rim. An object of the present invention is, therefore, to provide a tyre pressure monitoring system that can be more easily mounted onto a wheel rim.

According to the invention defined in claim 1, a tyre parameter monitoring system comprises an electronic module comprising a fitting, a valve stem that is connectable with the electronic module, a washer and a rubber seal. The washer comprises interlocking means with which the washer is detachably attachable to the fitting of the electronic module. The rubber seal is clamped between a flat surface of the valve stem and a flat outer surface of the wheel rim in the mounted condition. The washer and the rubber seal provide an airtight connection between the valve stem and the electronic module. The fitting comprises an adapter which protrudes through the washer and is connected with the valve stem and the valve stem is spaced apart from the electronic module and is coupled with the electronic module by means of the adapter and the washer.

A tyre parameter monitoring system is, therefore, provided, in which the washer can be assembled with and disassembled from the electronic module when desired as the washer is detachably attachable by use of the interlocking means to the fitting of the electronic module. Therefore, the tyre parameter monitoring system can be more simply assembled and disassembled since the washer is mechanically detachably attached by use of the interlocking means to the fitting of the electronic module. The washer is used in conjunction with a one or more seals which are used to provide an airtight connection between the valve stem and the electronic module.

In some embodiments, the interlocking means is integral with an overmoulding of the washer. For example, the washer may include a mouldable material such as a plastic or metal which is shaped to form the interlocking means. In some embodiments, the interlocking means of the washer comprises at least one protrusion and the fitting of the electronic module comprises at least one indentation which corresponds to the protrusion of the washer so as to provide an interlocking mechanism between the washer and the fitting of the electronic module. Alternatively, the interlocking means of the washer may include at least one indentation and the fitting of the electronic module may include at least one protrusion corresponding to the indentation of the washer to provide an interlocking mechanism between the washer and the fitting of the electronic module.

The washer may include a protruding fitting, which may for example be substantially cylindrical and have a diameter that is less than the diameter of the washer. The cylindrical protruding fitting is positioned in a substantially cylindrical opening of the fitting. The protrusions may extend radially from the protruding fitting and be engageable with an indentation in the wall of the opening of the fitting so as to interlock the protrusion with the indentation and detachable attach the washer to the fitting.

In some embodiments, the interlocking action may be a rotational action about the longitudinal axis of the cylindrical protruding fitting and opening. The action may be a bayonet type action. The interlocking mechanism may provide a detachable connection that restricts relative rotational movement between the washer and the electronic module.

In one embodiment, the interlocking means comprises two protrusions that extend radially from the washer, each protrusion interlocking with a corresponding indentation of the fitting to restrict rotational movement of the washer with respect to the electronic module. For example, the washer may include a cylindrical protruding fitting from which two protrusions may extend radially on opposing sides of the cylindrical protruding fitting. However, the number of protrusions as that extend radially from washer is not limited to two and one protrusion or more than two protrusions, for example three or four protrusions may be provided. The protrusions may be distributed uniformly around the circumference of the washer or protruding fitting, if provided.

In some embodiments, the protrusions have the form of a latch or wing that extends radially outwardly from a longitudinal axis of the washer. The protrusions may extend substantially perpendicularly or at an inclined angle to the longitudinal axis.

In some embodiments, the protrusions have the form of a rib having a long direction that extends parallel to the longitudinal axis, a height that extends radially from a longitudinal axis of the washer and a width that extends along the circumference of the protruding fitting.

Typically, the valve stem is attached to the wheel rim using a nut which is placed over the outer surface of the valve stem and which is tightened against the outer surface of the wheel rim. In some embodiments, the valve stem comprises an outer surface that is sized and shaped so as to provide an integral nut. This embodiment has the advantage that the number of components of the system is reduced, thus further simplifying the assembly of the system onto the wheel rim.

The seal is a rubber seal, for example an O-ring. and is clamped between a flat end surface of the valve stem and a flat outer surface of the wheel rim in the mounted condition. This embodiment has the advantage that a groove for accommodating the seal is not required in the outer surface of the wheel rim or the end face of the valve stem. This arrangement further simplifies the construction of the tyre parameter monitoring system and assembly of the tyre parameter monitoring system to the wheel rim.

In some embodiments, a seal is provided that is positioned on an inner surface of the wheel rim. The seal may be at least partially positioned within an indentation of the washer, the indentation being positioned at the opposing side of the washer from the interlocking means.

In some embodiments, a seal is provided on each side of the wheel rim so that a first seal, for example a rubber O ring, is positioned between the valve stem and the outer surface of the wheel rim and a second seal is positioned between the washer and the inner surface of the wheel rim.

In the present invention, the fitting of the electronic module comprises an adapter which protrudes outwardly from the electronic module through the washer and is connected with the valve stem. The valve stem is spaced apart from the electronic module by the adapter and is coupled with the electronic module by means of the adapter, for example by means of a threaded connection between the valve stem and the adapter.

The electronic module may include one or more sensor units or sense circuits for monitoring a parameter of the tyre that are positioned within a housing of the electronic module. In one particular embodiment, the electronic module accommodates a tyre pressure sensor unit.

A method for mounting a tyre parameter monitoring system to a wheel rim is defined in claim 7.

The method comprises positioning an electronic module which comprises a fitting on an inner surface of wheel rim, detachably attaching a washer comprising interlocking means with the fitting, the washer being positioned on the inner surface of the wheel rim, positioning a seal on an outer surface of the wheel rim; positioning a valve stem on the outer surface of the wheel rim such that the seal is positioned between the valve stem and the outer surface of the wheel rim and attaching the valve stem to the outer surface of the wheel by tightening the valve stem against the outer surface of the wheel rim using a nut and securing the seal between the valve stem and the outer surface of the wheel rim, wherein the valve stem comprises an outer surface that is sized and shaped to provide an integral nut. In an embodiment of the method which does not form part of the presently claimed invention, the valve stem is inserting into a hole of the wheel rim and into the washer, and the valve stem tightened against the outer surface of the wheel rim using the integral nut to connect the valve stem with the electronic module. In the present invention, the fitting of the electronic module comprises an adapter and the adapter is inserted through the washer and the hole in the wheel rim and the adapter is connected to the valve stem by a thread to connect the valve stem with the electronic module, and the valve stem is tightened against the outer surface of the wheel rim using the integral nut.

In some embodiments, the interlocking means of the washer comprises one or more protrusions which are connected to one or more corresponding indentations of the fitting to detachably attach the washer to the fitting of the electronic module. In an embodiment, the one or more protrusions extend radially from the washer and are engaged with a corresponding indentation of the fitting by a rotational movement of the washer around its axis to detachably attach the washer to the fitting of the electronic module by a mechanical interlocking action.

In another embodiment, the interlocking means of the washer comprise one or more indentations which are connected to one or more corresponding protrusions of the fitting to detachably attach the washer to the fitting of the electronic module. The indentations may extend in a radial direction such that the washer can be detachably attached to the fitting of the electronic module by a rotational movement of the washer about the longitudinal axis of the washer so as to mechanically engage the indentations of the washer with the protrusion of the fitting.

In some embodiments, one or more seals are provided. The method includes positioning a seal on the outer surface of the wheel rim such that the seal is positioned between the valve stem and the outer surface of the wheel rim and attaching the valve stem to the outer surface of the wheel rim by tightening the valve stem against the outer surface of the wheel rim using a nut and securing the seal between the valve stem and the outer surface.

The method may also include positioning a seal on the inner surface of the wheel rim such that the seal is positioned between the washer and the inner surface of the wheel rim and attaching the washer to the inner surface of the wheel rim by tightening the valve stem against the outer surface of the wheel rim using a nut and securing the seal between the washer and the inner surface.

The valve stem includes an integral nut. The integral nut is provided by the outer surface of the nut that is sized and shaped to provide an integral nut.

In the present invention, the fitting of the electronic module comprises an adapter. The adapter is inserted through the washer and the hole in the wheel rim from the inner surface of the wheel rim. The adapter is connected to the valve stem by a threaded connection to connect the valve stem with the electronic module. The valve stem is tightened against the outer surface of the wheel rim using the integral nut. The valve stem is spaced apart from the electronic module by the adapter in this embodiment. In some embodiments, a seal such as an O-ring is positioned between the valve stem and the adapter.

Embodiments will now be described with reference to the drawings.
- Figure 1a: illustrates a cross-sectional view of a tyre parameter monitoring system according to a first example not forming part of the invention mounted on a wheel rim.
- Figure 1b: illustrates an exploded perspective view of the tyre parameter monitoring system of figures 1a and 1b.
- Figure 1c: illustrates a perspective view of the tyre parameter monitoring system of figure 1a.
- Figure 2a: illustrates an exploded perspective view of a tyre parameter monitoring system according to a second example not forming part of the invention.
- Figure 2b: illustrates a perspective view of a tyre parameter monitoring system of figure 2a.
- Figure 3: illustrates a perspective view of a tyre parameter monitoring system according to a third example not forming part of the invention.
- Figure 4: illustrates an exploded view of a tyre parameter monitoring system according to the invention.

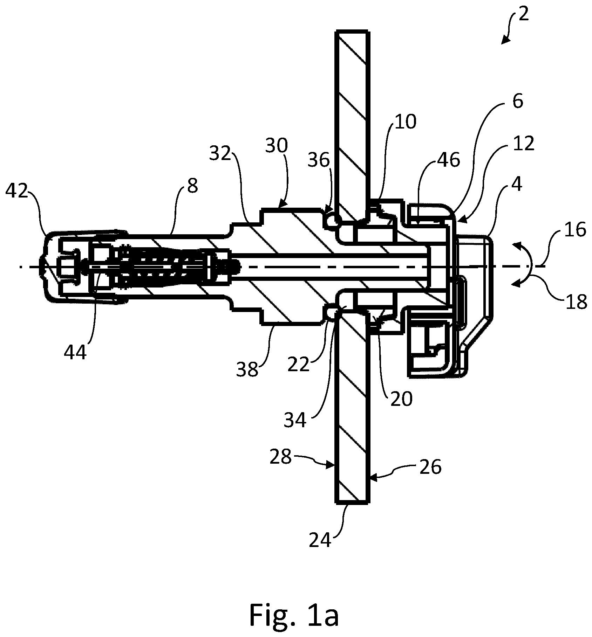

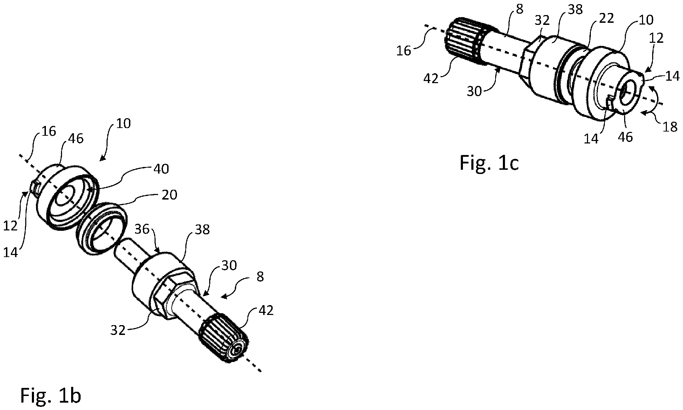

Figure 1a illustrates a cross-sectional view, figure 1b an exploded perspective view and figure 1c a perspective view of a tyre parameter monitoring system 2 according to a first example not forming part of the invention.

The tyre parameter monitoring system 2 includes an electronic module 4 including a fitting 6, a valve stem 8 that is connectable with the electronic module 4 and a washer 10. The washer 10 includes interlocking means 12 with which the washer 10 is detachably attachable to the fitting 6 of the electronic module 4. The interlocking means 12 of the washer 10 is positioned within the fitting 6 of the electronic module 4 and is mechanically engaged with the fitting 6 so as to assemble the washer 10 and the electronic module 4. The interlocking means can also be disengaged to as to disassemble the washer 10 from the electronic module 4.

In the first example, the interlocking means 12 comprise two protrusions 14 which extend radially from the washer 10. The protrusions 14 may extends perpendicularly outwardly from a longitudinal axis 16 of the washer 10 and form wings or latches. However, the protrusions 14 may also extend at an inclined angle to the longitudinal axis 16. The two protrusions 14 are positioned uniformly around longitudinal axis 16 of the washer 10. In this example, the protrusions 14 are integral with an overmoulding 38 of the washer 10. The overmoulding 38 provides a protruding fitting 46 that is substantially cylindrical and that has an outer diameter which is smaller than the outer diameter of the washer body. The protrusions 14 each extend radially from the outer surface of the cylindrical protruding fitting 46 to form a wing or latch in the first example.

However, the number of protrusions 14 is not limited to two. For example one or more than two, for example three or four protrusions may be provided. The protrusion s14 may also extend radially outwardly at an inclines angle to the longitudinal axis 16.

The fitting 6 of the electronic module 4 includes two indentations, which cannot be seen in the drawings, each corresponding to one of the protrusions 14 of washer 10 such that the protrusions 14 can be inserted into the indentations and interlocked with the indentations and the fitting 6 by means of a rotational movement around the axis 16 in the direction of the arrows 18 to assemble and disassemble the washer 10 and the electronic module 4.

The tyre parameter monitoring system 2 further includes a seal 20 and a rubber seal 22. As is illustrated in the cross-sectional view of the tyre parameter monitoring system 2, when mounted on a wheel rim 24, the seal 20, the washer 10 and the electronic module 4 are positioned adjacent the inner surface 26 of the wheel rim 24 and, therefore, within the tyre which is attached the wheel rim 24. The seal 20 is positioned at least partially within an indentation 40 of the washer 10. The indentation 40 is positioned in the opposing face of the washer 10 from the protruding fitting 46. The seal 20 has a ring-shaped form with an inner diameter that is selected so as to be able to support the outer diameter of the valve stem 8.

The rubber seal 22 and the valve stem 8 are positioned adjacent the outer surface 28 of the wheel rim 24 and outside of the tyre. In this example, the end face 36 of the valve stem 8 has a flat surface and the outer surface 24 of the wheel rim also has flat surface. The rubber seal 22 is clamped between the two flat surfaces 36, 28. The valve stem 8 includes a thread on its outer surface with which the valve stem 8 is connected to the fitting 6 of the electronic module 4.

In the example illustrated with reference to figure 1, the valve stem 8 includes an outer surface 30 which is sized and shaped so as to provide an integral nut 32 with which the valve stem 8 can be tightened against the outer surface 28 of the wheel rim 24. The section of the outer surface 30 providing the integral nut 32 may have a hexagonal shape or one or more flat surfaces to assist gripping of the outer surface 30 and other sections of the valve stem 8 may have a different size and/or shape, for example be cylindrical. In the assembled condition illustrated in figure 1a, the valve stem 8 extends through the rubber seal 22, through a hole 34 in the wheel rim 24, through the seal 20 and washer 10 so as to be connected to the electronic module 4.

The valve stem 8 also includes a cap 42 which covers a pin 44 positioned within the valve stem 8 to form the inflation valve. The pin 44 is movable along the longitudinal axis 16 of the valve stem 8 so as to open the valve in order to introduce air into, or remove air from, the tyre.

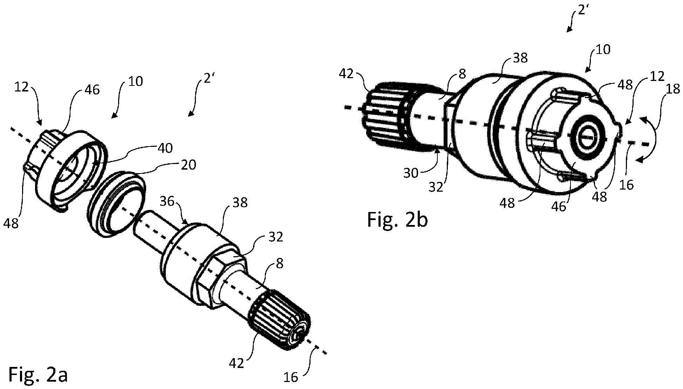

Figure 2a illustrates an exploded view and figure 2b a perspective view of a tyre parameter monitoring system 2' according to a second example not forming part of the invention. The tyre parameter monitoring system 2' of the second example also includes an electronic module 4 comprising a fitting 6, a valve stem 8 which is connectable with electronic module 4 and a washer 10 including interlocking means 12 with which the washer 10 is detachably attachable to the fitting 6 of the electronic module 4. In the second example, the interlocking means 12 of the washer 10 is provided by four protrusions 14 which extend radially from the washer 10 and which are uniformly distributed about the axis 16.

In this example, the protrusions 14 have the form of ribs 48 which are positioned on and may be integrally formed from the outer surface of the cylindrical protruding fitting 46 of the washer 46. Each rib 48 has a long direction that is substantially parallel to the longitudinal axis 16, a height that extends substantially perpendicularly from the longitudinal axis 16 and a width that extends around the circumference of the cylindrical protruding fitting 46.

The fitting 6 of the electronic module 4 includes four indentations not seen in figure 2, one for each of the protrusions 14 so as to allow the washer 10 to be interlocked with the fitting 6 by a rotational movement of the washer 10 and protrusions 14 about the axis 16 as indicated by the arrow 18 in figure 2b. The washer 10 can be assembled to and disassembled from the electronic module 4 by means of this rotational action.

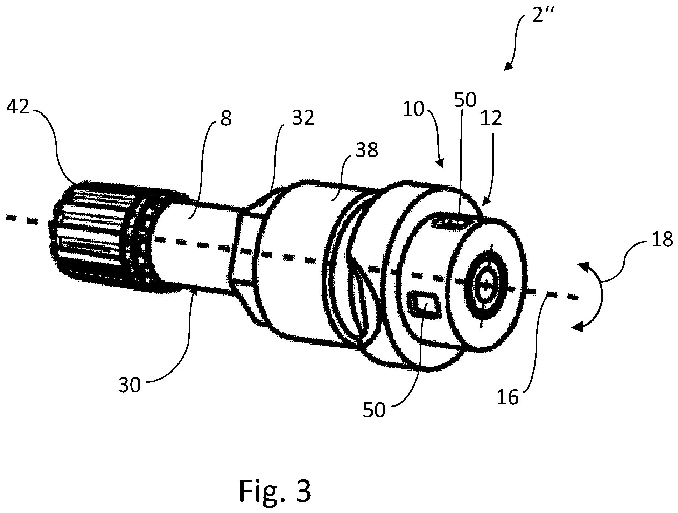

Figure 3 illustrates a tyre pressure monitoring system 2" according to a third example not forming part of the invention. The tyre parameter monitoring system 2" of the third example differs in the form of the interlocking means 12 of the washer 10. In the example illustrated in figure 3, the interlocking means 12 include at least one indentation 50 positioned in the outer surface of the washer 10. In this particular example, four indentations 50 are provided which are uniformly spaced about the axis 16 and which are positioned in an outer surface of the washer 10 so as to face radially outwards from the axis 16. In this example, the washer 10 includes a substantially cylindrical protruding fitting 46 and the indentations 40 are positioned in the outer surface of the substantially cylindrical protruding fitting 46.

The fitting 6 of the electronic module 4 has a substantially cylindrical opening (not shown) and includes four protrusions that extend from the wall of the opening, each protrusion sized, shaped and positioned to correspond to one of the indentations 50 so as to provide a mechanical interlocking between the indentation 50 of the washer 10 and the protrusion of the fitting 6 of the electronic module 4 so as to allow the washer 10 to be detachably attached to the electronic module 4.

In some examples, the interlocking action may be a rotational action about the axis 16 as indicated by the arrow 18. However, in a non-illustrated embodiment, an axial snapping action resulting interlocking between the indentations 50 and protrusions of the electronic module 4 may also be provided.

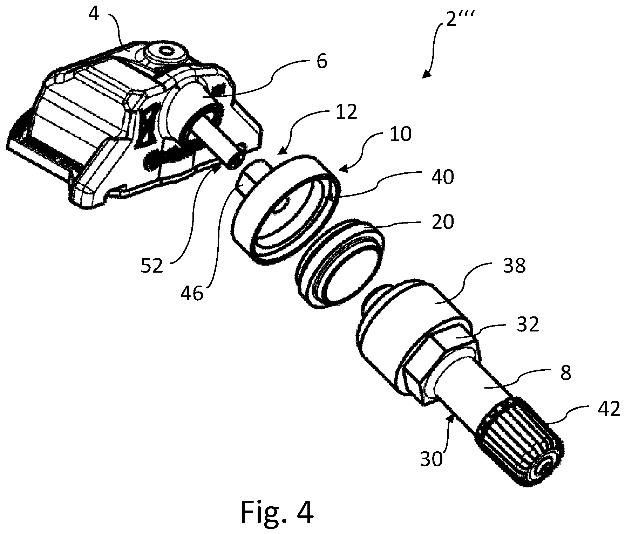

Figure 4 illustrates a tyre parameter monitoring system 2‴ according to the invention.

In this embodiment, the tyre parameter monitoring system 2‴ includes an adapter 52 which is attached to the fitting 6 of the electronic module 4. The adapter 52 protrudes from the fitting 6. In this embodiment, the washer 10 includes an interlocking means 12 which is provided by the form of the outer surface of the washer 10 which interlocks with the fitting 6. In this embodiment, the washer 10 includes a protruding fitting 46 that is substantially cylindrical and has at least one flat face that is engageable with a corresponding flat face of a substantially cylindrical opening of the fitting 6 of the electronic module 4. The washer 10 includes an indentation 40 in its end face that opposes the protruding fitting 46 that accommodates the seal 20.

In this embodiment, the adapter 52 protrudes through the washer 10, through the seal 20 and through the wheel rim. The adapter 52 is connected to the valve stem 8 by a threaded connection. The adapter 52 may include an external thread which engages with an internal thread of the valve stem 8. A seal such as an O-ring may be positioned between the adapter 52 and the valve stem 8.

In this embodiment, the valve stem 8 is spaced apart from the electronic module 4 whereas in the embodiments illustrated in figures 1 to 3, the valve stem extends into the electronic module 4. The outer surface 30 of the valve stem 8 of the tyre parameter monitoring system 2‴ of the fourth embodiment may also include an integral nut 32 as in the embodiments illustrated in figures 1 to 3.

A tyre parameter monitoring system is provided that can be used with a clamp-in type valve and which enables the valve 8 to be assembled and disassembled from the electronic module 4 more easily, since the washer 10 is detachably attachable to the electronic module 4 by a purely mechanical interlocking action. Additionally, relative rotational movement between the washer 10 and the electronic module 4 can be restricted by appropriate design of the interlocking means 12 on the washer 10 and on the electronic module 4.

## Claims

1. A tyre parameter monitoring system (2‴), comprising:
an electronic module (4) comprising a fitting (6);
a valve stem (8) that is connectable with the electronic module (4);
a washer (10);
a rubber seal (22),
wherein the washer (10) comprises interlocking means (12) with which the washer (10) is detachably attachable to the fitting (6) of the electronic module (4),
wherein the rubber seal (22) is adapted to be clamped between a flat surface (36) of the valve stem (8) and a flat outer surface (28) of a wheel rim (24) in the mounted condition,
wherein the washer (10) and the rubber seal (22) provide an airtight connection between the valve stem (8) and the electronic module (4) and
**characterised in that** the fitting (6) comprises an adapter (52) which protrudes through the washer (10) and is connected with the valve stem (8) and the valve stem (8) is spaced apart from the electronic module (4) and is coupled with the electronic module (4) by means of the adapter (52) and the washer (10).

2. A tyre parameter monitoring system (2; 2‴) according to claim 1, wherein the interlocking means (12) is integral with an overmoulding (38) of the washer (10).

3. A tyre parameter monitoring system (2; 2‴) according to one of claims 1 to 2, wherein the interlocking means (12) comprises at least one protrusion (14) and the fitting (6) comprises at least one indentation or the interlocking means comprises at least one indentation (50) and the fitting (6) comprises at least one protrusion.

4. A tyre parameter monitoring system (2; 2‴) according to one of claims 1 to 3, wherein the interlocking means (12) comprises two protrusions (14) that extend radially from the washer (10), each protrusion (14) interlocking with an indentation of the fitting (6) to restrict rotational movement of the washer (10) with respect to the electronic module (4).

5. A tyre parameter monitoring system (2, 2‴) according to one of claims 1 to 4, wherein the valve stem (8) comprises an outer surface (30) that is sized and shaped to provide an integral nut (32).

6. A tyre parameter monitoring system (2; 2‴) according to one of claims 1 to 5, wherein the electronic module (4) accommodates a tyre pressure sensor unit.

7. A method for mounting a tyre parameter monitoring system (2; 2‴) to a wheel rim of a vehicle, the method comprising:
positioning an electronic module (4) with a fitting (6) on an inner surface (26) of the wheel rim (24);
detachably attaching a washer (10) comprising interlocking means (12) with the fitting (6), the washer (10) being positioned on the inner surface (26) of the wheel rim (24);
positioning a seal (22) on a flat outer surface (28) of the wheel rim (24);
positioning a valve stem (8) on the outer surface (28) of the wheel rim (24) such that the seal (22) is positioned between the valve stem (8) and the flat outer surface (28) of the wheel rim (24);
attaching the valve stem (8) to the outer surface (28) of the wheel rim (24) by tightening the valve stem (8) against the outer surface (28) of the wheel rim (24) using a nut (32) and securing the seal (22) between a flat surface (36) of the valve stem (8) and the flat outer surface (28) of the wheel rim (24), wherein the valve stem (8) comprises an outer surface (30) that is sized and shaped to provide an integral nut (32),
wherein the method further comprises:
the fitting (6) of the electronic module (4) comprises an adapter (52) and the adapter (52) is inserted through the washer (10) and the hole (34) in the wheel rim (24) and the adapter (52) is connected to the valve stem (8) by a thread to connect the valve stem (8) with the electronic module (4), and the valve stem (8) is tightened against the outer surface (28) of the wheel rim (24) using the integral nut (32).

8. A method according to claim 7, wherein
the interlocking means (12) comprises one or more protrusions (14) that are connected to one or more corresponding indentations of the fitting (6) to detachably attach the washer (10) to the fitting (6) of the electronic module (4) or to detach the washer (10) from the fitting of the electronic module (4), or
the interlocking means (12) comprise one or more indentations (50) that are connected to one or more corresponding protrusions of the fitting (6) to detachably attach the washer (10) to the fitting (6) of the electronic module (4) or to detach the washer (10) from the fitting of the electronic module (4).

## Patentansprüche

1. Reifenparameterkontrollsystem (2‴), das Folgendes aufweist:
ein elektronisches Modul (4), das ein Anschlussstück (6) aufweist;
einen Ventilschaft (8), der mit dem elektronischen Modul (4) verbindbar ist;
eine Unterlegscheibe (10);
eine Gummidichtung (22),
wobei die Unterlegscheibe (10) ein Eingriffsmittel (12) umfasst, mit dem die Unterlegscheibe (10) lösbar an dem Anschlussstück (6) des elektronischen Moduls (4) anbringbar ist,
wobei die Gummidichtung (22) dazu ausgelegt ist, im montierten Zustand zwischen eine flache Fläche (36) des Ventilschafts (8) und eine flache Außenfläche (28) einer Radfelge (24) geklemmt zu sein,
wobei die Unterlegscheibe (10) und die Gummidichtung (22) eine luftdichte Verbindung zwischen dem Ventilschaft (8) und dem elektronischen Modul (4) bereitstellen und **dadurch gekennzeichnet, dass** das Anschlussstück (6) einen Adapter (52) aufweist, der durch die Unterlegscheibe (10) ragt und mit dem Ventilschaft (8) verbunden ist, und der Ventilschaft (8) von dem elektronischen Modul (4) beabstandet ist und mit dem elektronischen Modul (4) mittels des Adapters (52) und der Unterlegscheibe (10) gekoppelt ist.

2. Reifenparameterkontrollsystem (2; 2‴) nach Anspruch 1, wobei das Eingriffsmittel (12) mit einer Überspritzung (38) der Unterlegscheibe (10) integral ist.

3. Reifenparameterkontrollsystem (2; 2‴) nach einem der Ansprüche 1 bis 2, wobei das Eingriffsmittel (12) mindestens einen Vorsprung (14) aufweist und das Anschlussstück (6) mindestens eine Vertiefung aufweist oder das Eingriffsmittel mindestens eine Vertiefung (50) aufweist und das Anschlussstück (6) mindestens einen Vorsprung aufweist.

4. Reifenparameterkontrollsystem (2; 2‴) nach einem der Ansprüche 1 bis 3, wobei das Eingriffsmittel (12) zwei Vorsprünge (14) aufweist, die sich radial von der Unterlegscheibe (10) erstrecken, wobei jeder Vorsprung (14) mit einer Vertiefung des Anschlussstücks (6) in Eingriff kommt, um eine Drehbewegung der Unterlegscheibe (10) in Bezug auf das elektronische Modul (4) einzuschränken.

5. Reifenparameterkontrollsystem (2, 2‴) nach einem der Ansprüche 1 bis 4, wobei der Ventilschaft (8) eine Außenfläche (30) aufweist, die derart dimensioniert und geformt ist, dass sie eine integrale Mutter (32) bereitstellt.

6. Reifenparameterkontrollsystem (2; 2‴) nach einem der Ansprüche 1 bis 5, wobei das elektronische Modul (4) eine Reifendrucksensoreinheit aufnimmt.

7. Verfahren zum Montieren eines Reifenparameterkontrollsystems (2; 2‴) an einer Radfelge eines Fahrzeugs, wobei das Verfahren Folgendes aufweist:
Positionieren eines elektronischen Moduls (4) mit einem Anschlussstück (6) auf einer Innenfläche (26) der Radfelge (24);
lösbares Anbringen einer Unterlegscheibe (10), die Eingriffsmittel (12) aufweist, mit dem Anschlussstück (6), wobei die Unterlegscheibe (10) auf der Innenfläche (26) der Radfelge (24) positioniert wird;
Positionieren einer Dichtung (22) auf einer flachen Außenfläche (28) der Radfelge (24);
Positionieren eines Ventilschafts (8) auf der Außenfläche (28) der Radfelge (24) derart, dass die Dichtung (22) zwischen dem Ventilschaft (8) und der flachen Außenfläche (28) der Radfelge (24) positioniert wird;
Anbringen des Ventilschafts (8) an der Außenfläche (28) der Radfelge (24) durch Festziehen des Ventilschafts (8) gegen die Außenfläche (28) der Radfelge (24) unter Verwendung einer Mutter (32) und Befestigen der Dichtung (22) zwischen einer flachen Fläche (36) des Ventilschafts (8) und der flachen Außenfläche (28) der Radfelge (24), wobei der Ventilschaft (8) eine Außenfläche (30) aufweist, die derart dimensioniert und geformt ist, dass sie eine integrale Mutter (32) bereitstellt, wobei das Verfahren ferner Folgendes aufweist:
das Anschlussstück (6) des elektronischen Moduls (4) weist einen Adapter (52) auf und der Adapter (52) wird durch die Unterlegscheibe (10) und das Loch (34) in der Radfelge (24) eingesetzt und der Adapter (52) wird mit dem Ventilschaft (8) durch ein Gewinde verbunden, um den Ventilschaft (8) mit dem elektronischen Modul (4) zu verbinden, und der Ventilschaft (8) wird gegen die Außenfläche (28) der Radfelge (24) unter Verwendung der integralen Mutter (32) festgezogen.

8. Verfahren nach Anspruch 7, wobei
das Eingriffsmittel (12) einen oder mehrere Vorsprünge (14) aufweist, die mit einer oder mehreren entsprechenden Vertiefungen des Anschlussstücks (6) verbunden werden, um die Unterlegscheibe (10) lösbar an dem Anschlussstück (6) des elektronischen Moduls (4) anzubringen oder um die Unterlegscheibe (10) von dem Anschlussstück des elektronischen Moduls (4) zu lösen, oder
das Eingriffsmittel (12) eine oder mehrere Vertiefungen (50) aufweist, die mit einem oder mehreren Vorsprüngen des Anschlussstücks (6) verbunden werden, um die Unterlegscheibe (10) lösbar an dem Anschlussstück (6) des elektronischen Moduls (4) anzubringen oder um die Unterlegscheibe (10) von dem Anschlussstück des elektronischen Moduls (4) zu lösen.

## Revendications

1. Système de surveillance de paramètre de pneu (2‴), comprenant :
un module électronique (4) comprenant un raccord (6) ;
une valve de pneu (8) qui peut être reliée au module électronique (4) ;
une rondelle (10) ;
un joint en caoutchouc (22) ;
dans lequel la rondelle (10) comprend un moyen d'interverrouillage (12) avec lequel la rondelle (10) peut être fixée de manière amovible au raccord (6) du module électronique (4),
dans lequel le joint en caoutchouc (22) est adapté pour être serré entre une surface plate (36) de la valve de pneu (8) et une surface externe plate (28) d'une jante de roue (24) dans l'état monté,
dans lequel la rondelle (10) et le joint en caoutchouc (22) fournissent une liaison étanche à l'air entre la valve de pneu (8) et le module électronique (4) et
**caractérisé en ce que** le raccord (6) comprend un adaptateur (52) qui fait saillie à travers la rondelle (10) et est relié à la valve de pneu (8) et la valve de pneu (8) est espacée du module électronique (4) et est couplée au module électronique (4) au moyen de l'adaptateur (52) et de la rondelle (10).

2. Système de surveillance de paramètre de pneu (2 ; 2‴) selon la revendication 1, dans lequel le moyen d'interverrouillage (12) est d'un seul tenant avec un surmoulage (38) de la rondelle (10).

3. Système de surveillance de paramètre de pneu (2 ; 2‴) selon l'une des revendications 1 à 2, dans lequel le moyen d'interverrouillage (12) comprend au moins une partie saillante (14) et le raccord (6) comprend au moins un renfoncement ou le moyen d'interverrouillage comprend au moins un renfoncement (50) et le raccord (6) comprend au moins une partie saillante.

4. Système de surveillance de paramètre de pneu (2 ; 2‴) selon l'une des revendications 1 à 3, dans lequel le moyen d'interverrouillage (12) comprend deux parties saillantes (14) qui s'étendent radialement à partir de la rondelle (10), chaque partie saillante (14) s'interverrouillant avec un renfoncement du raccord (6) pour restreindre un mouvement rotatif de la rondelle (10) par rapport au module électronique (4).

5. Système de surveillance de paramètre de pneu (2 ; 2‴) selon l'une des revendications 1 à 4, dans lequel la valve de pneu (8) comprend une surface externe (30) qui est dimensionnée et formée pour fournir un écrou intégral (32).

6. Système de surveillance de paramètre de pneu (2 ; 2‴) selon l'une des revendications 1 à 5, dans lequel le module électronique (4) accueille une unité de capteur de pression de pneu.

7. Procédé de montage de système de surveillance de paramètre de pneu (2 ; 2‴) sur une jante de roue d'un véhicule, le procédé comprenant :
le positionnement d'un module électronique (4) avec un raccord (6) sur une surface interne (26) de la jante de roue (24) ;
la fixation de manière amovible d'une rondelle (10) comprenant un moyen d'interverrouillage (12) avec le raccord (6), la rondelle (10) étant positionnée sur la surface interne (26) de la jante de roue (24) ;
le positionnement d'un joint (22) sur une surface externe plate (28) de la jante de roue (24) ;
le positionnement d'une valve de pneu (8) sur la surface externe (28) de la jante de roue (24) de telle sorte que le joint (22) est positionné entre la valve de pneu (8) et la surface externe plate (28) de la jante de roue (24) ;
la fixation de la valve de pneu (8) à la surface externe (28) de la jante de roue (24) en serrant la valve de pneu (8) contre la surface externe (28) de la jante de roue (24) à l'aide d'un écrou (32) et en fixant le joint (22) entre une surface plate (36) de la valve de pneu (8) et la surface externe plate (28) de la jante de roue (24), dans lequel la valve de pneu (8) comprend une surface externe (30) qui est dimensionnée et formée pour fournir un écrou intégral (32),
dans lequel le procédé comprend en outre :
le raccord (6) du module électronique (4) comprend un adaptateur (52) et l'adaptateur (52) est inséré à travers la rondelle (10) et le trou (34) dans la jante de roue (24) et l'adaptateur (52) est relié à la valve de pneu (8) par un filetage pour relier la valve de pneu (8) au module électronique (4), et la valve de pneu (8) est serrée contre la surface externe (28) de la jante de roue (24) à l'aide de l'écrou intégral (32).

8. Procédé selon la revendication 7, dans lequel
le moyen d'interverrouillage (12) comprend une ou plusieurs parties saillantes (14) qui sont reliées à un ou plusieurs renfoncements correspondants du raccord (6) pour fixer de manière amovible la rondelle (10) au raccord (6) du module électronique (4) ou pour détacher la rondelle (10) du raccord du module électronique (4), ou
le moyen d'interverrouillage (12) comprend un ou plusieurs renfoncements (50) qui sont reliés à une ou plusieurs parties saillantes correspondantes du raccord (6) pour fixer de manière amovible la rondelle (10) au raccord (6) du module électronique (4) ou pour détacher la rondelle (10) du raccord du module électronique (4).
